(19) **Europäisches Patentamt / European Patent Office / Office européen des brevets**

(11) **EP 1 873 966 A1**

(12) **EUROPEAN PATENT APPLICATION**
published in accordance with Art. 153(4) EPC

(43) Date of publication:
**02.01.2008 Bulletin 2008/01**

(51) Int Cl.:
*H04L 12/16* [(2006.01)]    *H04M 3/42* [(2006.01)]

(21) Application number: **07711067.4**

(22) Date of filing: **08.03.2007**

(86) International application number:
**PCT/CN2007/000752**

(87) International publication number:
**WO 2007/101411 (13.09.2007 Gazette 2007/37)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **08.03.2006 CN 200610058689**

(71) Applicant: **Huawei Technologies Co., Ltd.**
**Longgang District, Shenzhen**
**Guangdong 518129 (CN)**

(72) Inventors:
- **LIAN, Shaoxiong**
  **Shenzhen Guangdong 518129 (CN)**
- **WANG, Kefeng**
  **Shenzhen Guangdong 518129 (CN)**

(74) Representative: **Körber, Martin Hans**
**Mitscherlich & Partner**
**Sonnenstrasse 33**
**80331 München (DE)**

(54) **PLAYING METHOD, SYSTEM AND DEVICE**

(57) The present invention discloses a playing method, including: receiving a playing instruction containing offset information, determining a playing point according to the offset information contained in the playing instruction and playing based on the playing point. The present invention also discloses a playing system and a playing apparatus. With the playing method, the playing system and the playing apparatus provided by the present invention, a specified segment of a media file can be played on demand.

Fig. 2

**Description**

**Field of the Invention**

The present invention relates to technologies for processing media files, and particularly, to a method, a system and an apparatus for playing content.

**Background of the Invention**

In some services, e.g. some telecommunication services, a media playing system needs to play media files including music, video or other digital information according to preset contents, and provide the music, the video or other digital information to a user terminal. For example, music may be played based on pre-arranged contents or contents customized by a telephone user, and outputted to the telephone terminal of the user. On many occasions, the media playing system need not play a whole media file, but just a segment of the file, e.g., 30 or 100 seconds of a 3-minute song. A media processing application is therefore employed in advance to capture the segment to be played and save the captured segment into a storage device; or the user may also prepare some segments himself / herself and upload the prepared segments to the storage device. Each segment in the storage device is allocated with a file name, and when a segment needs to be played, the media playing system searches for the corresponding file according to the file name, so that the segment is played and outputted to the user terminal.

In the related art the process through which the media playing system plays a media file includes: receiving a playing instruction including the file name of the media file to be played; playing the media file specified by the file name in the received playing instruction; outputting the played information to the user terminal. The playing instruction is usually generated when a user service is triggered. The media file is usually played by a dedicated multimedia card from the beginning of the media file, and the media file may be played repeatedly from the beginning to the end.

The disadvantage of the practice in the related art is: if it is required to play just a specified segment of a media file to the user, the segment must be saved separately before being played.

**Summary of the Invention**

In view of the above, the primary objective of the present invention is to provide a playing method to play a specified segment of a media file on demand.

Another primary objective of the present invention is to provide a playing system to play the specified segment of the media file on demand.

Yet another objective of the present invention is to provide a playing apparatus to play the specified segment of the media file on demand.

A playing method, includes:

receiving a playing instruction containing offset information;

determining a playing point according to the offset information contained in the playing instruction; and

playing based on the playing point.

A playing system, includes:

a service unit and a playing unit, wherein the playing unit further comprises a playing sub-unit and a playing point sub-unit;

the service unit is used for receiving a message which indicates that a service is triggered and sending a playing instruction to the playing sub-unit;

the playing sub-unit is used for forwarding to the playing point sub-unit the playing instruction received from the service unit, and playing the file specified in the playing instruction according to a playing point information returned by the playing point sub-unit; and

the playing point sub-unit is used for determining the playing point according to the playing instruction forwarded by the playing sub-unit, and returning the playing point information to the playing sub-unit.

A playing apparatus, comprising:

a playing sub-unit, used for forwarding a received playing instruction to a playing point sub-unit, and playing a corresponding file specified in the playing instruction based on playing point information returned by the playing point sub-unit; and

the playing point sub-unit, used for determining the playing point according to the playing instruction forwarded by the playing sub-unit, and returning the playing point information to the playing sub-unit.

The playing instruction in embodiments of the present invention includes offset information, from which the starting point and / or ending point of the segment to be played can be obtained; and based on the offset information a complete media file can be played from the starting point specified in the playing instruction and / or to the ending point specified in the playing instruction, i.e. a specified segment of the media file can be played on demand. The present invention demonstrates the following merits:

1) the present invention provides a playing method for playing a segment of a media file without capturing and separately saving the segment in advance, and improves the flexibility of the playing process; in addition, by setting the starting point offset and the ending point offset, both the playing starting point and ending point of a media file can be set freely, which further increases process flexibility beyond the process in which only one offset is set;

2) in the related art, when a large number of media file segments are to be captured, a lot of manual and system resources shall be spent, which brings heavy work load and high operation cost; while in the present invention manual and system resources are saved on capturing and saving media file segments, which reduces work load and operation cost;

3) in the related art, when different segments of a media file need to be played for one or more users, every segment shall be saved alone, which wastes storage resource, and every segment shall need a separate index number, which also wastes index number resource; furthermore, since the file cannot be played freely, the playing process shows poor flexibility; according to the present invention, on the contrary, the segments no longer need to be saved separately, i.e. the media file can be shared by multiple playing demands or users, which saves storage resource;

4) in the related art, when the user or the market demand changes and the segments in use need to be replaced accordingly, new segments shall be captured and saved and a long time shall be spent on generating the new media segment files, which retards the speed of the response to the demand of the user. For example, when the user wants to replace a segment of an old song in use with a segment of a new song, the segment of the new song shall be captured and saved, sometimes the newly captured and saved segment shall further be verified through certain ways such as telephone confirmation, hence after customizing the song segment, the user shall wait for a long time, e.g. days, before using the new segment, which greatly affects the user experience; according to the present invention, however, the process of capturing and saving segment is omitted, hence a quick response can be given to the demand of the user to improve the user experience;

5) in the related art, only files saved in advance can be played; therefore, the user who wants customization service can only choose from given segments or make media files and upload the media files by himself; when the user is asked to choose from the given segments, the user will be very passive and it will be hard for the user to choose a segment to his heart's content; if the user makes and uploads segment files himself, the work load of the user will be increased and the user is required to have certain media file processing skills, i.e. the application scope of the practice is limited; in embodiments of the present invention, when the user wants to customize a media file segment while listening to the media file, the user can simply choose, by a way such as pushing a button, a playing starting point and a playing ending port while listening; therefore, the user can customize a wanted segment freely, the satisfaction and experience of the user can thus be improved; furthermore, in embodiments of the present invention, when the user customizes the segment through a given menu, only multiple time segment selections of the media file is needed for the user, the process of capturing and saving in advance is not necessary; therefore, the media file segment to be played can be customized flexibly and conveniently while more choices may be provided to satisfy different demands of the users;

6) the segment playing pattern is also flexible according to the technical scheme of the present invention , e.g. when the playing ending point is placed before the playing starting point, the media file segment can even be played reversely.

## Brief Description of the Drawings

Figure 1 is a schematic diagram illustrating the media playing system in an embodiment of the present invention;

Figure 2 is a flow chart of the media file playing method in an embodiment of the present invention.

## Detailed Description of the Invention

The playing method in an embodiment of the present invention includes: receiving a playing instruction including offset information, determining a playing point according to the offset information in the playing instruction, and playing based on the playing point.

The embodiments of the present invention are further described hereinafter with reference to the accompanying drawings.

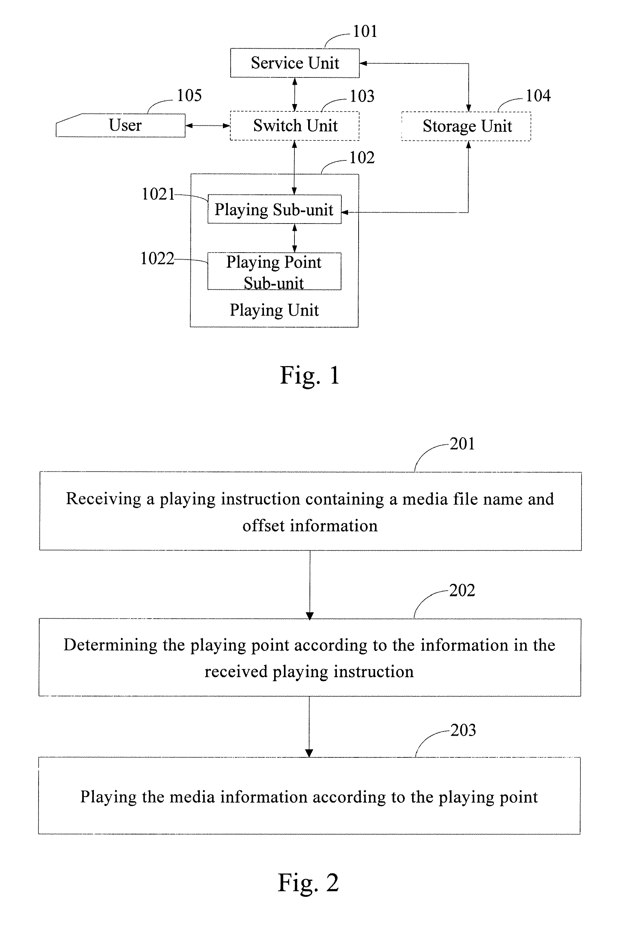

Figure 1 shows the media playing system in an embodiment of the present invention. The system mainly includes a service unit 101 and a playing unit 102; the system may further include: a switch unit 103 and a storage unit 104, wherein the playing unit 102 further includes: a playing sub-unit 1021 and a playing point sub-unit 1022.

The service unit 101 is used for receiving a message indicating that a user service is triggered, and sending a playing instruction to the playing sub-unit 1021 in the playing unit 102.

The service unit 101 is further used for sending an inquiry to the storage unit 104 and receiving an inquiry confirmation from the storage unit 104.

Usually it is the switch unit 103 that sends to the service unit 101 the message indicating the user service is triggered; the service unit 101 may send the playing instruction to the playing sub-unit 1021 in the playing unit 102 directly or via the switch unit 103.

The playing sub-unit 1021 in the playing unit 102 forwards the playing instruction to the playing point sub-unit 1022 upon receiving the instruction from the service unit 101, receives the playing point information from the playing point sub-unit 1022, and plays the media file specified in the playing instruction based on the playing point information. In the current embodiment, the playing sub-unit 1021 does not directly play the media file specified in the playing instruction upon receiving instruction from the service unit 101; instead, the playing sub-unit 1021 forwards the playing instruction to the playing point sub-unit 1022 and then plays the media file based on the playing point information returned from the playing point sub-unit 1022. The playing sub-unit 1021 in the playing unit 102 establishes a connection with the storage unit 104 storing the media file specified in the playing instruction, and plays the media file based on the playing point information. Additionally, the playing sub-unit 1021 may copy the media file temporarily to the playing sub-unit 1021 before playing the media file based on the playing point information.. The played media signal is outputted to the User Terminal 105 directly or via the switch unit 103. The process of playing the media file based on the playing point information is further described in Block 203 of Figure 2.

The playing point sub-unit 1022 in the playing unit 102 is used for receiving the playing instruction from the playing sub-unit 1021, determining the playing point and sending the playing point information to the playing sub-unit 1021.

The process of determining the playing point is further described in Block 202 of Figure 2.

The switch unit 103 is used for forwarding the message received from the User Terminal 105, e.g., the message indicating that the service is triggered, to the service unit 101, and forwarding the playing instruction received from the service unit 101 to the playing sub-unit 1021 in the playing unit 102.

The storage unit 104 is used for providing the playing sub-unit 1021 in the playing unit 102 with the media file to be played. The storage unit 104 may also be used for receiving the inquiry from the service unit 101 and returning the inquiry confirmation to the service unit 101.

In the embodiment, the playing sub-unit 1021 plays the media based on the playing point information returned from the playing point sub-unit 1022, so a specific segment of the whole media file can be play based on the playing point.

Figure 2 is a flow chart of the media file playing method in the embodiment.

Block 201: a playing instruction including offset information is received. The playing instruction includes the file name of the media file and offset information.

The offset information includes an offset reference point and an offset value; and may further include an offset type.

When the method is applied to the system shown in Figure 1, Block 201 includes the following process.

The playing unit in Figure 1 receives the playing instruction including the media file name and offset information from the service unit. The service unit may send the playing instruction to the playing unit directly or via the switch unit. The service unit saves service logic information in advance, which includes: condition for triggering the service, user information, playing information, etc. The condition for triggering the service indicates the conditions in which the media file is to be played, and the condition for triggering the service is configured according to the requirement of the telecommunication system or the user. When the condition for triggering service is met, the playing service is triggered and the service unit sends the playing instruction to the playing unit.

Normally, after the playing service is triggered and before the playing instruction is sent, the corresponding media file will be searched for according to the file name. If the corresponding media file is found, the playing instruction is sent; if the corresponding media file is not found, the playing instruction is not sent. For example, before the service unit in Figure 1 sends the playing instruction to the playing unit, the service unit will search for corresponding media file in the storage unit according to the file name. If the corresponding media file is found, the playing instruction is sent to the playing unit; if the corresponding media file is not found, the playing instruction is not sent. The user information and the playing information define which media file is to be played and for which user the media file is to be played when the condition for triggering the service is met. The playing information includes: the media file name, the offset reference point and the offset value, and may further include the offset type.

Normally the playing instruction is sent according to a media playing protocol. Different media playing protocols may produce different offset reference points, offset values and offset types. For example, the offset reference point may usually be the beginning or the end of the media file according to some protocols, or may also be any point between the beginning and the end of the media file according to other protocols; the offset value indicates the value of the relative offset from the offset reference point; the offset type may be a byte number, or a percentage, or a time value, or other types, wherein the unit is byte for the byte number, % for the percentage and second for the time value. The playing information may include none offset type, and in such case the default offset type is the byte number.

The detailed description of the different offset reference points, offset values and offset types in the playing information defined by the different media playing protocols is given in Table 1.

Table 1: Playing Information Description

| Index No. | Information in the playing information | Description |
|---|---|---|
| 1 | Offset reference point, starting point offset | The default offset types for the offset reference point and the starting point offset are the byte number. |
| 2 | Offset reference point, starting point offset and offset type | The offset reference point and the starting point offset are of the same offset type, |
| 3 | Offset reference point, offset type for the offset reference point, starting point offset and offset type for the offset value | |
| 4 | Offset reference point, ending point offset | The default offset types for the offset reference point and the ending point offset are the byte number |
| 5 | Offset reference point, ending point offset and offset type | The offset reference point and the ending point offset are of the same offset type |
| 6 | Offset reference point, offset type for the offset reference point, ending point offset and offset type for the offset value | |
| 7 | Offset reference point, starting point offset and ending point offset | The default offset types for the offset reference point, the starting point offset and the ending point offset are the byte number |
| 8 | Offset reference point, starting point offset, ending point offset and offset type | The offset reference point, the starting point offset and the ending point offset are of the same offset type |
| 9 | Offset reference point, offset type for the offset reference point, starting point offset, ending point offset and offset type for the offset values | The starting point offset and ending point offset are of the offset type for the offset values |
| 10 | Offset reference point, offset type for the offset reference point, starting point offset, offset type for the starting point offset, ending point offset and offset type for the ending point offset | |

(continued)

| Index No. | Information in the playing information | Description |
|---|---|---|
| 11 | Reference point for starting point offset, reference point for ending point offset, starting point offset and ending point offset | The default offset type for the reference point for starting point offset, the reference point for ending point offset, the starting point offset and the ending point offset are the byte number |
| 12 | Reference point for starting point offset, reference point for ending point offset, starting point offset, ending point offset and offset type | The reference point for starting point offset, the reference point for ending point offset and the starting / ending point offsets are of the same offset type |
| 13 | Reference point for starting point offset, reference point for ending point offset, offset type for the offset reference points, starting point offset, ending point offset and offset type for the offset values | The reference point for starting point offset and the reference point for ending point offset are of the same offset type, i.e., the offset type for the offset reference points; the starting point offset and ending point offset are of the same offset type, i.e., the offset type for the offset values |
| 14 | Reference point for starting point offset, reference point for ending point offset, offset type for the offset reference points, starting point offset, offset type for the starting point offset, ending point offset and offset type for the ending point offset | The reference point for starting point offset and the reference point for ending point offset are of the same offset type, i.e., the offset type for the offset reference points |
| 15 | Reference point for starting point offset, offset type for the reference point for starting point offset, reference point for ending point offset, offset type for the reference point for ending point offset, starting point offset, ending point offset and offset type for the offset values | The starting point offset and ending point offset are of the same offset type, i.e., the offset type for the offset values |
| 16 | Reference point for starting point offset, offset type for the reference point for starting point offset, reference point for ending point offset, offset type for the reference point for ending point offset, starting point offset, offset type for the starting point offset, ending point offset and offset type for the ending point offset | |

Appropriate combinations other than the combinations shown in Table 1 are also available. For example, the playing information may include: reference point for starting point offset, reference point for ending point offset and offset value, wherein the offset value is both the starting point offset and ending point offset; or the playing information may include: reference point for starting point offset, reference point for ending point offset, offset value, offset type for the offset reference points, offset type for offset value, etc. Examples will not be exhausted herein.

In Block 201, the offset value may be a positive value, or a negative value, or zero.

Block 202: the playing point is determined based on the information in the received playing instruction and the basic information of the media file.

The process of determining the playing point in Block 202 further includes: determining the starting point and / or ending point of the segment to be played.

When the media file name in the acquired playing instruction includes information such as the byte number and the playing time length, the basic information such as the size of the media file in byte and the playing duration of the media file can be determined directly. The size of the media file is usually measured by bytes; and the playing duration is usually measured by seconds.

In this process, the basic information of the media file can also be determined by inquiring based on the file name.

For example, in Block 202, the playing unit in Figure 1 determines the playing point based on the information in the received playing instruction and the basic information of the media file. When the media file name in the playing instruction received by the playing unit includes the information such as the byte number and the playing time length, basic information such as the size of the media file in byte and the playing duration of the media file can be determined directly. The playing unit may also inquire of the storage unit about the basic information of the media file based on the file name.

Normally, the playing point is located at the byte which offsets from the offset reference point according to the offset value, and the playing point includes the playing starting point and / or playing ending point. If, according to the media playing protocol, the playing instruction in Block 201 includes only one offset value, and the offset value is the starting point offset, the playing point determined in Block 202 is the playing starting point; If, according to the media playing protocol, the playing instruction includes only one offset value and the offset value is the ending point offset, the playing point determined in Block 202 is the playing ending point; If, according to the media playing protocol, the playing instruction includes both the starting point offset and the ending point offset, the playing point determined in Block 202 also includes both the playing starting point and the playing ending point. For example, in the cases described in Index No. 1, 2 and 3 of Table 1, the playing starting point is determined in Block 202; in the cases described in Index No. 4, 5 and 6 of Table 1, the playing ending point is determined in Block 202; in the cases described in Index No. 7 to 16 of Table 1, both the playing starting point and the playing ending point can be determined in Block 202.

The method for determining the playing point is provided in the corresponding media playing protocol, e.g., the media playing protocol between the service unit and the playing unit in Figure 1. The media playing protocol may define a number of methods for calculating the playing point, such as Equations (1) and (2) provided herein:

$$Bpp=Bedm+Beq \qquad\qquad (1)$$

or,

$$Bpp=Bedm-Beq \qquad\qquad (2).$$

In Equations (1) and (2), Bpp is the byte number corresponding to the playing point, Bedm is the byte number corresponding to the offset reference point and Beq is the byte number corresponding to the offset value.

Usually, when Equation (1) is adopted in the media playing protocol for calculating the playing point, if the offset reference point is at the beginning of the media file, the offset value in the playing instruction will be a positive value or zero; if the offset reference point is at the end of the media file, the offset value in the playing instruction will be a negative value or zero. Or it can deduced reversely that when the offset reference point is at the beginning of the media file and the offset value in the playing instruction is a positive value or zero, or when the offset reference point is at the end of the media file and the offset value in the playing instruction is a negative value or zero, Equation (1) is adopted for calculating the playing point.

Usually, when Equation (2) is adopted in the media playing protocol for calculating the playing point, if the offset reference point is at the beginning of the media file, the offset value in the playing instruction will be a negative value or zero; if the offset reference point is at the end of the media file, the offset value in the playing instruction will be a positive value or zero. Or it can deduced reversely that when the offset reference point is at the beginning of the media file and the offset value in the playing instruction is a negative value or zero, or when the offset reference point is at the end of the media file and the offset value in the playing instruction is a positive value or zero, Equation (2) is adopted for calculating the playing point.

No matter which of Equations (1) and (2) is adopted in the media playing protocol for calculating the playing point, when the offset reference point is at a point between the beginning and the end of the media file, the offset value in the playing instruction can be a positive value, a negative value, or zero. Normally, when the offset is a positive value and Equation (1) is adopted for calculating the playing point, or the offset is a negative value and Equation (2) is adopted for calculating the playing point, the byte number corresponding to the playing point is greater than the byte number of the offset reference point; therefore, the playing point is temporally posterior to the offset reference point; when the offset is a positive value and Equation (2) is adopted for calculating the playing point, or the offset is a negative value and Equation (1) is adopted for calculating the playing point, the byte number corresponding to the playing point is smaller than the byte number of the offset reference point, the playing point is therefore temporally prior to the offset reference point; when the offset equals zero, the playing point is right at the offset reference point.

Equations (3), (4) or (5) can be used for calculating the byte number corresponding to the offset reference point in Equations (1) and (2).

When the type of the reference point is the byte number:

$$Bedm=Vedm \qquad (3);$$

when the type of the reference point is the percentage:

$$Bedm= Vedm \times Bfl/100 \qquad (4);$$

and when the type of the reference point is the time:

$$Bedm= Vedm \div Tfl \times Bfl \qquad (5).$$

In Equations (3), (4) and (5), Bedm is the byte number corresponding to the offset reference point, Vedm is the value of the offset reference point, Bfl is the size of the media file in byte, and Tfl is the playing time length of the media file. The unit of the percentage in Equation (4), i.e. the unit of the Vedm, is %. The time unit in Equation (5) can be second.
Equation (6), (7) or (8) can be used for calculating the byte number corresponding to the offset value in Equations (1) and (2).
When the type of the offset value is the byte number:

$$Beq=Veq \qquad (6);$$

when the type of the offset value is the percentage:

$$Beq=Veq \times Bfl/100 \qquad (7);$$

and when the type of the offset value is the time:

$$Beq=Veq \div Tfl \times Bfl \qquad (8)$$

In Equations (6), (7) and (8), Beq is the byte number corresponding to the offset value, Veq is the offset value, Bfl is the size of the media file in byte, and Tfl is the playing time length of the media file. The unit of the percentage in Equation (7), i.e. the unit of the Veq, is %. The time unit in Equation (8) can be second.
In Equations (1) and (2), the byte number corresponding to the reference point and the byte number corresponding to the offset are respectively obtained first, then the byte number corresponding to the playing point is obtained. In practical applications, the playing point can be obtained through a number of other ways according to different media playing protocols. For example, the percentage corresponding to the reference point and the percentage corresponding to the offset respectively can be obtained first, then the byte number corresponding to the playing point can be obtained based on the percentage corresponding to the playing point; or the time corresponding to the reference point and the time corresponding to the offset respectively can be obtained first, then the byte number corresponding to the playing point can be obtained based on the time corresponding to the playing point. The byte number corresponding to the playing point is obtained by multiplying the size of the media file in byte by the percentage corresponding to the playing point; or the byte number corresponding to the playing point is obtained by dividing the time corresponding to the playing point by the total playing time length of the media file, and then multiplying the size of the media file in byte by the quotient.
If the offset reference point can only be the beginning or the end of the media file according to the media playing protocol, Block 201a, a process of verifying the validity of the offset value by the playing unit, can be added between Block 201 and Block 202. Block 201a includes: verifying the validity of the offset value based on the information in the received playing instruction; if the offset value is valid, performing Block 202; if the offset value is invalid, quitting the playing process.

The validity of the offset value can be verified by a number of means according to different playing protocols. For example, when the type of the offset value is the percentage, the absolute value of the valid offset should be an integer smaller than or equal to 100; when the type of the offset value is the time, the absolute value of the valid offset should be smaller than or equal to the total playing time length of the media file; when the type of the offset value is byte number, the absolute value of the valid offset should be an integer smaller than or equal to the size of the media file in byte. The total playing time length of the media file and the size of the media file in byte can be acquired from the media file name in the received playing instruction, or by inquiring the storage unit. In Figure 2, the validity of the offset value can be verified by the playing unit based on the information in the received playing instruction.

If the offset reference point may be at the beginning or the end of the media file, or a random point between the beginning and the end of the media file according to the media playing protocol, Block 201b, a process of verifying the validity of the offset reference point, can be added between Block 201 and Block 202. Block 201b includes: verifying the validity of the offset reference point based on the information in the received playing instruction; if the offset reference point is valid, performing Block 202; if the offset reference point is invalid, quitting the playing process.

The validity of the offset reference point can be verified by a number of means according to different playing protocols. For example, when the type of the offset reference point is the percentage, the absolute value of the valid offset reference point should be an integer smaller than or equal to 100; when the type of the offset reference point is the time, the absolute value of the valid offset reference point should be smaller than or equal to the total playing time length of the media file; when the type of the offset reference point is the byte number, the absolute value of the valid offset reference point should be an integer smaller than or equal to the size of the media file in byte. The total playing time length of the media file and the size of the media file in byte can be acquired from the media file name in the received playing instruction, or by inquiring the storage unit. In Figure 2, the validity of the offset reference point can be verified by the playing unit based on the information in the received playing instruction.

The offset reference point, the reference point type, the offset value type and the offset value in Block 202 are the same as described in Block 201.

Block 203: the media file is played based on the playing point.

The playing point in Block 203 includes the starting point and / or ending point of the segment to be played.

For example, when the processes are applied to the system in Figure 1, Block 203 includes playing the media file based on the playing point by the playing unit. The playing unit is usually connected to the storage unit and plays the media file directly based on the playing starting point and / or playing ending point, or copies the media file to the playing unit temporarily and plays the media file based on the playing starting point and / or playing ending point, and the temporary copy of the media file will be released after being played.

Normally the media file is played by a dedicated multimedia card. When the playing point determined in Block 202 includes the playing starting point and the playing ending point, the file may be played repeatedly from the playing starting point to the playing ending point as required; when the playing point determined in Block 202 includes the playing starting point, the file will be played repeatedly from the playing starting point to the end of the file as required; when the playing point determined in Block 202 includes the playing ending point, the file will be played repeatedly from the beginning of the file to the playing ending point as required.

The media signal played by the playing unit in Figure 1 is outputted to the user terminal directly or via the switch unit.

If, according to the media playing protocol, the offset reference point may be at the beginning or the end of the media file or a random point between the beginning and the end of the media file, Block 202a, a process of verifying the validity of the playing point, may be added between Block 202 and Block 203. Block 202a includes: verifying the validity of the playing point; performing Block 203 if the playing point is valid; or quitting the playing process if the playing point is invalid. The validity of the playing point can be verified by a number of means according to different playing protocols. For example, the byte number corresponding to the valid playing point should be natural number smaller than or equal to the size of the media file in byte. In Figure 2, the validity of the playing point can be verified by the playing unit.

The playing instruction in the embodiment includes offset information, from which the starting point and / or ending point of the segment to be played can be obtained. Based on the offset information, a complete media file can be played from the starting point specified in the playing instruction and / or to the ending point specified in the playing instruction. In other words, a specified segment of the media file can be played on demand.

The format of the media file name in the embodiment is not restricted as long as the file name corresponds to the media file.

The system and method provided in the embodiments of the present invention can play a segment of the media file on demand; the segment may be a specific segment of the media file or the whole media file.

When the media playing system plays the media file with the playing method provided in the embodiments of the present invention, the user may customize a segment of a song in advance through any of the following ways:

1) Before listening to a song at the user terminal, the user learns about the operations for customization, e.g. pressing Button 1 to set the playing starting point, pressing Button 2 to set the playing ending point, and wherein the time difference between the starting and ending points should be shorter than a certain length; during the process of listening, the user performs these operations to customize the playing starting point and the playing ending point of the wanted segment; the playing staring point and the playing ending point determined by the user is converted by a programmable logic into service logic information to be saved in the service unit of the media playing system. The user may customize any wanted segment, which improves the user satisfaction and experience.

2) The user is provided with a menu listing different time segments of the song to be chosen, i.e. different playing starting points and ending points in the song are provided; the user chooses from the points to customize the segment; the choice of the user is converted into the service logic information and saved in the service unit of the media playing system. The segment of the media file to be played can therefore be customized flexibly and conveniently, thus it is easier to satisfy the demands of different users since more choices are offered for users.

In embodiments of the present invention, the offset information is determined according to the content customized by the user. The played media signal is eventually outputted to the user terminal.

With the playing method provided by embodiments of the present invention, audio or video files can be played for the user terminal; other digital information, e.g. fax or text files may be sent for the user terminal.

The media playing method provided by the present invention can be used for, but not limited to, the telecommunication service applications.

The foregoing is only preferred embodiments of the present invention and is not for use in limiting the protection scope thereof. Any modification, equivalent replacement and improvement made under the spirit and principle of the present invention should be included in the protection scope thereof.

### Claims

1. A playing method, comprising:

   receiving a playing instruction containing offset information;
   determining a playing point according to the offset information contained in the playing instruction; and
   playing based on the playing point.

2. The playing method according to Claim 1, wherein the playing information comprises an offset reference point and an offset value;
   and the playing point is determined by offsetting from the offset reference point according to the offset value.

3. The playing method according to Claim 2, wherein the playing information further comprises an offset type.

4. The playing method according to Claim 3, wherein the offset type is any one of a byte number, a percentage, or time.

5. The playing method according to Claim 3, wherein the offset type is the offset type for the offset reference point and the offset value.

6. The playing method according to Claim 3, wherein the offset type comprises the offset type for the offset reference point and the offset type for the offset value.

7. The playing method according to Claim 6, wherein the offset type for the offset reference point and the offset for the offset value may be identical or different.

8. The playing method according to any of Claims 1 to 7, wherein the offset reference point is the offset reference point for the playing starting point; and / or
   the offset value is the offset value for the playing starting point; and
   the process of determining the playing point comprises: determining the playing starting point.

9. The playing method according to any of Claims 1 to 7, wherein the offset reference point is the offset referent point for the playing ending point; and / or
the offset value is the offset value for the playing ending point; and
the process of determining the playing point comprises: determining the playing ending point.

10. The playing method according to any of Claims 1 to 7, wherein the offset reference point comprises: the offset reference point for the playing starting point and the offset reference point for the playing ending point; and / or
the offset value comprises: the offset value for the playing starting point and the offset value for the playing ending point; and
the process of determining playing point comprises: determining the playing starting point and the playing ending point.

11. The playing method according to Claims 3, wherein the offset reference point comprises: offset reference point for the playing starting point and offset reference point for the playing ending point; and
the process of determining the playing point comprises:

    determining the playing starting point and the playing ending point;
    the offset type comprises: the offset type of the offset reference point for the playing starting point and the offset type of the offset reference point for the playing ending point.

12. The playing method according to Claim 11, wherein the offset type of the offset reference point for the playing starting point and the offset type of the offset reference point for the playing ending point may be identical or different.

13. The playing method according to Claim 3, wherein the offset value comprises: the playing starting point offset and the playing ending point offset; and
the process of determining the playing point comprises:

    determining the playing starting point and the playing ending point;
    the offset type comprises: the offset type of the playing starting point offset and the offset type of the playing ending point offset.

14. The playing method according to Claim 13, wherein the offset type of the playing starting point offset and the offset type of the playing ending point offset may be identical or different.

15. The playing method according to any of Claims 2 to 7 and Claims 11 to 14, before the process of determining the playing point according to the offset information contained in the playing instruction, further comprising:

    verifying validity of the offset value based on the information in the received playing instruction, and determining the playing point according to the offset information contained in the playing instruction when the offset value is valid.

16. The playing method according to any of Claims 2 to 7 and Claims 11 to 14, before the process of determining the playing point according to the offset information contained in the playing instruction, further comprising:

    verifying validity of the offset reference point based on the information in the received playing instruction, and determining the playing point according to the offset information contained in the playing instruction when the offset reference point is valid.

17. The playing method according to Claim 1, wherein the offset information is determined based on the content customized by a user.

18. A playing system, comprising a service unit and a playing unit, wherein the playing unit further comprises a playing sub-unit and a playing point sub-unit;
the service unit is used for receiving a message which indicates that a service is triggered and sending a playing instruction to the playing sub-unit;
the playing sub-unit is used for forwarding to the playing point sub-unit the playing instruction received from the service unit, and playing the file specified in the playing instruction according to a playing point information returned by the playing point sub-unit; and
the playing point sub-unit is used for determining the playing point according to the playing instruction forwarded by the playing sub-unit, and returning the playing point information to the playing sub-unit.

19. The playing system according to Claim 18, further comprising a switch unit, which is used for forwarding to the service unit the message indicating that the user service is triggered, and forwarding the playing instruction from the service unit to the playing sub-unit.

20. The playing system according to Claim 19, further comprising a user terminal, which is used for sending to the switch unit the message indicating that the service is triggered and receiving the played signal from the switch unit; wherein the switch unit is further used for receiving the played signal outputted by the playing sub-unit and forwarding the playing signal to the user terminal.

21. The playing system according to Claims 18, 19 or 20, further comprising a storage unit, which is used for providing the media file to the playing sub-unit to be played.

22. The playing system according to Claim 21, further comprising an inquiring connection between the storage unit and the service unit, wherein the inquiring connection is used for forwarding an inquiry from the service unit to the storage unit, and forwarding an inquiry confirmation from the storage unit to the service unit.

23. The playing system according to Claim 18, wherein the service unit is connected with the playing unit via a TCP / IP connection.

24. A playing apparatus, comprising:

a playing sub-unit, used for forwarding a received playing instruction to a playing point sub-unit, and playing a corresponding file specified in the playing instruction based on playing point information returned by the playing point sub-unit; and
the playing point sub-unit, used for determining the playing point according to the playing instruction forwarded by the playing sub-unit, and returning the playing point information to the playing sub-unit.

101

Service Unit

105

103

User ⟷ Switch Unit

104

Storage Unit

102

1021

Playing Sub-unit

1022

Playing Point
Sub-unit

Playing Unit

## Fig. 1

201

Receiving a playing instruction containing a media file name and
offset information

202

Determining the playing point according to the information in the
received playing instruction

203

Playing the media information according to the playing point

## Fig. 2

## INTERNATIONAL SEARCH REPORT

| | International application No. |
|---|---|
| | PCT/CN2007/000752 |

A. CLASSIFICATION OF SUBJECT MATTER

See extra sheet

According to International Patent Classification (IPC) or to both national classification and IPC

B. FIELDS SEARCHED

Minimum documentation searched (classification system followed by classification symbols)

IPC:  H04L; H04B; H04M; H04Q; G11B

Documentation searched other than minimum documentation to the extent that such documents are included in the fields searched

Electronic data base consulted during the international search (name of data base and, where practicable, search terms used)

CNPAT,WPI,EPODOC,PAJ    play playback segment fragment passage section portion offset start specif+ end color ring

C. DOCUMENTS CONSIDERED TO BE RELEVANT

| Category* | Citation of document, with indication, where appropriate, of the relevant passages | Relevant to claim No. |
|---|---|---|
| X | US 20040137880 A1 (Laurie Ann Holtzberg) 15 Jul. 2004 (15.07.2004) | 1-17,24 |
| | Description passages 0021-0027, figures 2,4 | |
| Y | | 18-23 |
| Y | CN 1599387 A (HUAWEI TECH CO., LTD.) 23 Mar. 2005 (23.03.2005) | 18-23 |
| | Description page 3 lines 9-24 | |
| A | CN 1625194 A (HUAWEI TECH CO., LTD.) 08 Jun. 2005 (08.06.2005) | 1-24 |
| A | CN 1119896 A (SONY CORP) 03 Apr. 1996 (03.04.1996) | 1-24 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 Jun. 2007 (04.06.2007) | **21 Jun. 2007 (21.06.2007)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>CHEN,Shanshan<br>Telephone No. (86-10)82336233 |

Form PCT/ISA /210 (second sheet) (April 2007)

14

# INTERNATIONAL SEARCH REPORT

International application No.

PCT/CN2007/000752

Continuation of : CLASSIFICATION OF SUBJECT MATTER

H04L12/16 ( 2007.01 ) i

H04M3/42 ( 2007.01 ) i

Form PCT/ISA /210 (extra sheet) (April 2007)

## INTERNATIONAL SEARCH REPORT
### Information on patent family members

| International application No. |
|---|
| PCT/CN2007/000752 |

| Patent Documents referred in the Report | Publication Date | Patent Family | Publication Date |
|---|---|---|---|
| US20040137880A1 | 15-07-2004 | US2002076014A1 | 20-06-2002 |
| | | US6625261B2 | 23-09-2003 |
| | | WO0251105A1 | 27-06-2002 |
| | | AU1987202A | 01-07-2002 |
| CN1599387A | 23-03-2005 | 无 | |
| CN1625194A | 08-06-2005 | WO2004102940A1 | 25-11-2004 |
| | | CN1540901A | 27-10-2004 |
| | | CN1553720A | 08-12-2004 |
| | | CN1671158A | 21-09-2005 |
| | | CN1671159A | 21-09-2005 |
| | | CN1681282A | 12-10-2005 |
| | | US2006153355A1 | 13-07-2006 |
| | | EP1705885A1 | 27-09-2006 |
| | | KR20060011875A | 03-02-2006 |
| CN1119896A | 03-04-1996 | WO9516262A1 | 15-06-1995 |
| | | EP0689206A1 | 27-12-1995 |
| | | JP7516101T | 26-03-1996 |
| | | US5687160A | 11-11-1997 |
| | | EP0689206A4 | 16-07-1997 |
| | | CN1295328A | 16-05-2001 |
| | | KR100287495B | 02-05-2001 |
| | | EP0689206B1 | 24-07-2002 |
| | | DE69431048E | 29-08-2002 |
| | | JP2004047075A | 12-02-2004 |
| | | CN1063863C | 28-03-2001 |
| | | CN1138269C | 11-02-2004 |

Form PCT/ISA /210 (patent family annex) (April 2007)